(19) Europäisches Patentamt
European Patent Office
Office européen des brevets

(11) **EP 1 797 317 B1**

(12) **EUROPEAN PATENT SPECIFICATION**

(45) Date of publication and mention
of the grant of the patent:
**07.05.2008 Bulletin 2008/19**

(51) Int Cl.:
*F03B 13/26* (2006.01)      *E02B 9/08* (2006.01)

(21) Application number: **05784581.0**

(86) International application number:
**PCT/GB2005/003653**

(22) Date of filing: **22.09.2005**

(87) International publication number:
**WO 2006/032892 (30.03.2006 Gazette 2006/13)**

(54) **HYDRODYNAMIC ENERGY GENERATING ASSEMBLY AND METHOD**

ANORDNUNG UND VERFAHREN ZUR ERZEUGUNG VON HYDRODYNAMISCHER ENERGIE

ENSEMBLE ET PROCEDE DE GENERATION D ENERGIE HYDRODYNAMIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.09.2004 GB 0421197**

(43) Date of publication of application:
**20.06.2007 Bulletin 2007/25**

(73) Proprietor: **Saunders, Douglas**
**Baldrine, Isle of Man IM4 6DZ (GB)**

(72) Inventor: **Saunders, Douglas**
**Baldrine, Isle of Man IM4 6DZ (GB)**

(74) Representative: **Skone James, Robert Edmund et al**
**Gill Jennings & Every LLP**
**Broadgate House**
**7 Eldon Street**
**London EC2M 7LH (GB)**

(56) References cited:
**CH-A5- 653 102**          **FR-A- 2 616 178**
**GB-A- 1 150 873**          **US-A1- 2003 192 308**

• **PATENT ABSTRACTS OF JAPAN vol. 009, no. 245 (M-418), 2 October 1985 (1985-10-02) & JP 60 098173 A (SHIYUNJI OOBA), 1 June 1985 (1985-06-01)**

**Description**

This invention relates to an assembly for harnessing hydrodynamic energy and converting it to electricity. In particular, the disclosed apparatus and method utilise the rise and fall of the tide to generate energy around the clock.

In the light of diminishing reserves of fossil fuels and the perceived political and environmental drawbacks of safely controlling nuclear power, the identification and harnessing of alternative sources of energy have been occupying the minds of scientists and engineers for decades. Ideally, the solution most acceptable to the purists, coveted by the majority of those concerned with the future of the planet as we presently know and understand it, is the harnessing and conversion to electricity of some of the accessible forms of natural energy, particularly those which are unlikely to have a detrimental effect on the environment and ecology of the land masses, oceans and atmosphere. It is generally accepted that the sources most likely to be amenable to conversion to practical use are solar, wind, wave, current and tidal, some of which are already past the embryonic stage. While some of these sources have been developed to a point where they already make a contribution to the electrical demands of localised consumers, none to date have attained the level of a continuous, industrial supply. Indeed, while each of the above natural energy forms has its own merits, the majority cannot be said to be so consistent or predictable in nature such as to guarantee a constant and reliable energy source particularly in the United Kingdom or Northern European latitudes.

In order to ascertain which potential energy sources are likely to prove the most suitable medium for research and development in the immediate future, the individual source should be compared with the following criteria and meet as many of the ideal requirements as possible.

1. Guaranteed availability at all times of the day throughout the year.
2. Ability to provide electrical energy on an industrial scale.
3. Have no adverse effect on the local, national or international environment.
4. Have an infinite life span.
5. Be accessible to development utilising existing technology.

Solar energy is perhaps the most advanced source of natural energy and has already been developed for scientific and domestic usage, as well as some forms of low power propulsion and direct current via battery supply. It is not guaranteed all year round in Northern climes but provides safe, clean heating and lighting, reliability and a minimal impact on domestic architecture with no ecological downside. The lifespan is infinite but has yet to be proven suitable for development on an industrial scale.

Wind energy has been in use for centuries throughout the world, best known in the form of Holland's windmills and as propulsive power for sailing vessels. More recently, the more modern three bladed, aero-dynamically designed windmills have been used in several European countries for agricultural and domestic power generation particularly in isolated locations. The nature of the machines used depend upon a continuous supply of moving air and, while this is available, wind generators have proven to be a reliable and efficient source of electricity albeit on a small scale, often supplementing the main grid supply. The absence of wind results in a loss of performance and the numbers of wind generators required to make up a commercial "wind farm" has a serious, negative visual impact on the surrounding environment which has generated organised protest and a great deal of local opposition. Another more recent downside has been confirmation from concerned bodies that aerial collisions with the rotating blades have had a detrimental effect on the bird population, in particular some of the most endangered and protected species. The wind energy source is variable which, allied to the number of units required, makes it somewhat impractical for a continuous industrial supply. Being a mechanical device, routine maintenance costs on a large number of machines have to be taken into account.

Potentially, wave energy could be harnessed but little has been attempted or achieved in this area until very recently. Operational units, notably in Scotland, are now contributing to the National Grid albeit as yet on a small scale. The source is a complex one, of infinite variety and unpredictability making study difficult. Certainly on a commercial scale, this approach appears to offer little immediate answer to national power requirements and is dependent on prevailing conditions.

Compared with other potential, natural energy sources, tidal energy is predictable in both time and scale with only minor variations imposed by the prevailing weather patterns. As long as the Earth orbits the Sun and the Moon the Earth, the date, time and height of the tide can be forecast into the next millennium.

Traditionally, the hydroelectric turbine has been designed to harness the potential energy of a limited water volume encapsulated in a high wall dam through a machine designed to utilise the static head. This maximises the use of the fresh water discharged through the turbine before discharging back into the river bed or reservoir downstream. In the case of the ocean tides, the static head is relatively small, but the volume of water available comparatively unlimited.

Where traditional hydro-electric installations such as dams depend on a huge water head with its associated potential energy, the static head available in any tidal region worldwide is in the region of a maximum of 12 metres while around the U.K. this varies between approximately 7 and 11 metres. What mostly distinguishes the tides from the captive, land based hydro-electric operating medium of fresh water however, is the sheer scale of the transient water volume, constantly moving in response to the gravitational pull of the sun and moon, waiting to be harnessed and trained into a practical useable form. Capturing the energy of the tidal movement is effectively controlling and using the greatest, constant form of potential energy available throughout the solar system, namely the force of gravity. From a purely practical standpoint, the routine effect and scope of the Earth's tidal pattern is as near natural, physical, perpetual motion as we are likely to be able to exploit.

A number of tidal energy generators have been proposed. For example, JP-A-60098174, JP-60098175, GB-A-0349260, FR-A-1055437 and US2003/0192308 each disclose turbine arrangements for converting the flow of tidal water into electricity. However, none of these proposals address the issue of how to generate power at all points of tide.

In practice, few tidal energy generators exist and, of those, none are able to harness the energy efficiently. What is needed is a converter able to process the abundant natural energy available from the twice daily tides.

In accordance with a first aspect of the present invention, a hydrodynamic energy generating assembly comprises at least two hydrodynamic energy generating devices, each comprising a reservoir bounded by a wall, a channel through the wall connecting the reservoir to the exterior environment, the channel being provided with a valve system which can be controlled to allow the flow of water through the channel into and out of the reservoir, and a turbine rotor being disposed in the channel and coupled to a generator for producing electrical energy in response to rotation of the turbine rotor by the water.

This arrangement allows for the generation of a substantially continuous output. Unlike known hydrodynamic generators which only generate electricity as water moves in one direction, this generating assembly can generate power during both the rising and the falling tide. By providing several reservoirs, each with associated channels and turbines, the water level in each reservoir can be controlled individually so that energy may be generated sequentially from each reservoir in turn. This avoids any operational hiatus which could be encountered at the turn of the tide, achieving a continuous, round the clock output.

The generator would typically be situated where it would be subject to a large tide in the external environment. For example, the generator could be located offshore, in the sea, on the coast, or even in a tidal river. The arrangement of the reservoir and channel is such that water can flow both into and out of the reservoir under the action of the tides. The direction of water flow will depend on the relative water levels inside and outside the reservoir. The commencement and cessation of the water flow, and so the water level inside the reservoir, is controlled by the valve system with the result that the magnitude of the hydrostatic head (the discrepancy between water levels) may be optimised and the timing of the water discharge through the turbine motor predetermined. Furthermore, power could be generated both as the water flows into the reservoir and as the water flow out, thereby taking advantage of the full tidal cycle.

The turbine rotor could be arranged so as to rotate in one direction as water enters the reservoir and in the other direction as water exits the reservoir. However advantageously, the channel and the turbine rotor are arranged so as to cause the turbine rotor to rotate in the same direction when water flows into the reservoir as when water flows out of the reservoir. This eliminates the need for a complicated, expensive reversible turbine rotor and associated control mechanism. This could be achieved in a number of ways but preferably the channel consists of a number of passageways through which water may be diverted so that it always passes through the turbine rotor in the same direction. Advantageously, the channel is arranged so that water always passes downwards through the rotor.

The turbine rotor could be disposed such that it always forms part of the route for water passing through the channel. However, it is preferable that the valve system can be further controlled to allow the flow of water to bypass the turbine rotor. This makes it possible to adjust the level of the water inside the reservoir to match that of the external environment. This allows a further degree of control over the relative water levels and thus assists in the control of energy generation.

Conveniently, the channel comprises first and second passages through the wall, each passage connecting the reservoir to the exterior environment, and a third passage connecting the first passage to the second passage. The first and second passages may, for example, extend substantially horizontally through the wall, one above the other. Preferably, the third passage is substantially perpendicular to the first and second passages. Conveniently, the turbine rotor is disposed in the third passage. Thus water may be directed through the wall by a number of different routes, either bypassing the turbine rotor via either of the first and second passages or passing through the rotor, and thus generating electricity, by entering the channel at one of the first and second passages, passing through the third passage, and exiting via the other of the first and second passages. Where the first and second passages are disposed above one another, water preferably enters the channel at the first (upper) passage, passes through the third passage, and exits via the opposite lower section of the second passage. This ensures water always moves downwards through the turbine rotor.

Preferably, the valve system comprises inner and outer valves, the first and second passages each being provided with an inner and an outer valve, the inner valve disposed between the reservoir interior and the third passage, and the outer valve disposed between the exterior environment and the third passage. This valve system provides a convenient way of controlling which route through the channel the water takes.

Advantageously, the turbine rotor is rotatably disposed about a substantially vertical axis. This gives rise to an even loading of the rotor and permits the full hydrostatic head to be available over the full rotor area. However, the turbine rotor could be mounted in any orientation convenient for the channel configuration.

Preferably, the valve system is further provided with hydraulic control means for opening and closing the valves. This could alternatively be achieved using motors or any other type of mechanical actuating means but a hydraulic or pneumatic system is considered to provide the necessary power to reliably operate against substantial static heads.

Preferably, the reservoir wall is provided with a plurality of channels and a turbine rotor is disposed in each channel. The more turbines available, the more energy can be converted and the more efficient the generator.

Preferably, a single turbine is disposed in each channel to maximise the efficiency with which the potential energy stored in the water head is converted to turbine rotation.

Conveniently, the wall bounding the reservoir is formed from a plurality of prefabricated interlocking modules. It is envisaged that the generator would be constructed in situ, but that it would be difficult, though not impossible, to build the entire structure on site since much will be underwater. Prefabricated wall modules would alleviate this problem to a significant extent.

As noted above, the generator could be built anywhere where it would be subject to suitable tidal forces. However in certain localities which suffer from coastal erosion, the generating device could advantageously be built on a coastline, in which case a portion of the wall would be a coastal wall. This re-enforces the coastal defences and protects the sea wall against erosion. In other locations, a sea based facility may be favoured over a coastal installation so as to avoid conflict with the sensitive environmental area along the coastline. Thousands of species rely on the coastline for its consistent, twice daily, washing and airing by the tides, which provides a regular food supply and regenerates oxygen.

Advantageously, the hydrodynamic energy generating assembly further comprises a control system adapted to sequentially control the valve systems thereby controlling the flow of water into and out of each reservoir.

The output from each reservoir may overlap with that from the next, or the control system could alternatively be adapted to allow energy generation by only one reservoir at a time. Preferably, the control system is adapted to control the flow of water such that at all times water is flowing in to or out of at least one of the reservoirs and is directed via a turbine rotor so that electrical energy is generated continuously. Preferably, the assembly comprises two or four hydrodynamic energy generating devices as previously described. Advantageously, the control system is further adapted to control the respective valve system of each device such that electrical energy is generated by each of the four devices in turn.

Conveniently, at least two of the reservoirs share a portion of their wall such that it is common to both of those reservoirs. This saves space since the reservoirs may be located immediately adjacent to one another.

In accordance with a second aspect of the present invention, a modular system is provided which when constructed forms a hydrodynamic energy generating assembly according to the first aspect of the invention.

In accordance with a third aspect of the invention, a method of hydrodynamic energy generation utilising tidal energy comprises the steps of:

(a) allowing water to pass, under tidal action, through a channel into a first reservoir from the external environment;
(b) preventing water flowing into or out of the first reservoir for a predetermined period of time, during which there is a change in tidal conditions;
(c) after a change in tidal conditions, allowing water to pass through the channel out of the first reservoir into the external environment; and
(d) preventing water flowing into or out of the first reservoir for a predetermined period of time, during which there is a change in tidal conditions,

wherein the flow of water in at least one of step (a) or step (c) is directed via a turbine rotor disposed in the channel, the turbine rotor being coupled to means for producing electrical energy, and steps (a) to (d) are additionally performed in respect of at least a second reservoir. The length of time allowed for each of steps

(a) to (d) may be individually determined for each reservoir according to the nature of the local tides and the steps need not be of equal duration. Preferably, the predetermined periods of time in steps (b) and (d) are not the same as each other and are different for each reservoir. Since energy may be generated both as water enters and exits the reservoirs, substantially the full tidal cycle is utilised.

Preferably, steps (a) to (d) are additionally performed in respect of third and fourth reservoirs. However the steps (a) to (d) are not necessarily carried out synchronously in each of the reservoirs. For example, the fourth reservoir could be sealed (step (b)) at the same time that water is exiting reservoirs 1, 2 and 3 (step (c)). In other words, it is preferable that the performance of steps (a) to (d) in respect of each reservoir is staggered relative to the other reservoir (s).

Advantageously, the steps are performed in a sequence such that at all times, water is flowing into or out of at least one of the reservoirs via a turbine rotor, so that electrical energy is continuously generated. Conveniently, energy is generated from the first and second reservoirs during step (a) and from the third and fourth reservoirs during step (c).

An example of a hydrodynamic energy generating assembly in accordance with the present invention will now be described with reference to the accompanying drawings, in which:-

Figure 1 is a plan view of a hydrodynamic energy generating assembly;
Figure 2 is a cross-section along the line X-X' shown in Figure 1;
Figure 3 is a schematic diagram showing a simplified cross-section similar to Figure 2;
Figures 4a and 4b illustrate the relative water levels between each of four reservoirs and the external environment over twelve hours of operation; and
Figures 5a, 5b and 5c illustrate Figures 4a and 4b in graphical form.

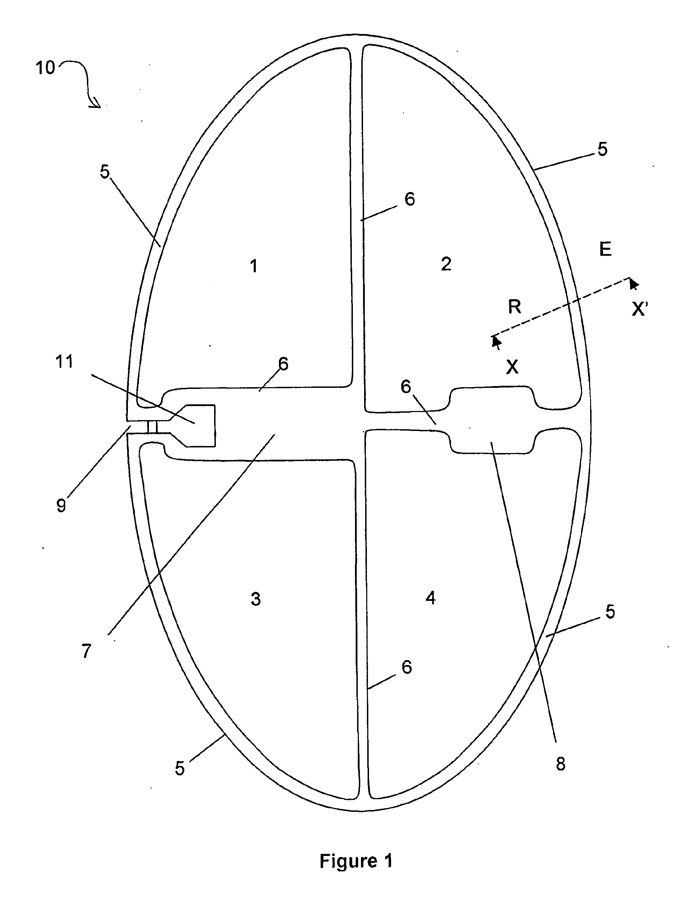

Figure 1 shows an embodiment of a hydrodynamic energy generating assembly having four reservoirs or cisterns 1, 2, 3, and 4 surrounded by an outer wall or membrane 5 and divided from one another by inner walls 6. The operation of each reservoir or cistern will be described below with reference to cistern 2 but it is to be understood that the same operational principles may be applied to each of the four cisterns shown. Furthermore, whilst the embodiment illustrated utilises four reservoirs, it is envisaged that any number of reservoirs could be employed, appropriate modifications being made to the operational method described below. In theory, any number of reservoirs greater than or equal to two could be used but, for reasons that will be discussed below, it is considered that the use of four cisterns may be advantageous.

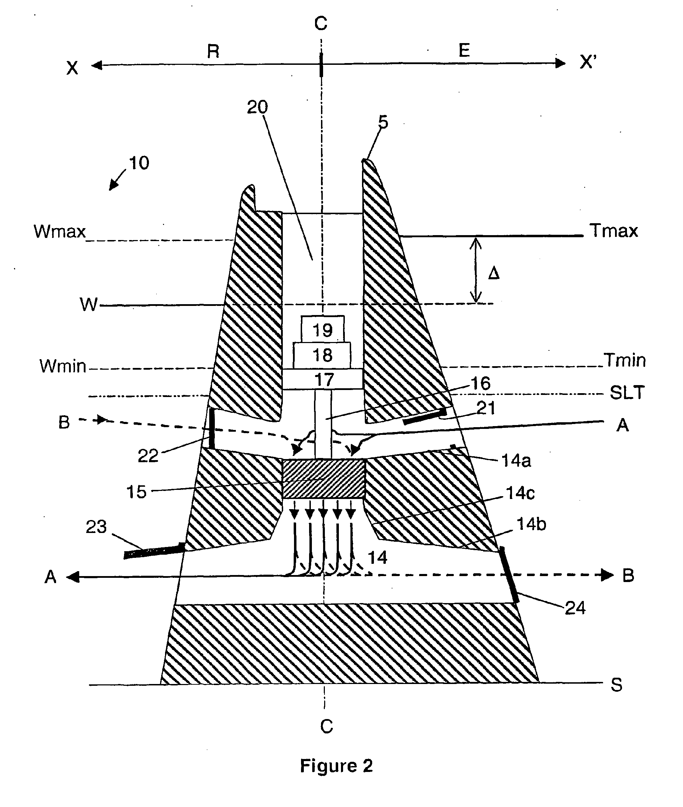

The generator 10 is located in a selected tidal area such as offshore, on the coastline or in a tidal river. Preferably, the chosen location would have higher than average tides so as to maximise the available energy source. The generator 10 extends vertically from the sea or river bed to a point above the high tide level of the surrounding water (see Figure 2).

The back-to-back, oval arrangement of reservoirs 1 to 4 shown in Figure 1 is particularly well suited to conditions in the open sea, since it is strong and resilient. However, if the assembly is constructed on a coastline, the reservoirs 1 to 4 may be arranged in a linear configuration. This can also assist in land reclamation and/or could provide a site for land fill waste disposal adjacent the generating assembly. Of course, any particular arrangement of reservoirs can be selected to suit the location.

The reservoir or cistern 2 is isolated from the external environment E (for example the sea) by outer wall or membrane 5. Inner walls 6 separate the cistern 2 from the other reservoirs. The walls 5 and 6 are designed to withstand the local weather conditions, being made for example of re-enforced concrete suitable for marine environments. For ease of construction the walls 5 and 6 may be formed from prefabricated interlocking modular parts which are manufactured at some other location, transported to the site and fitted together in situ.

The reservoirs should be large enough to contain a sufficient volume of water to maintain a substantial hydrostatic head (see below) for the desired period of time. As an example, it is estimated that an elliptical, four-reservoir device approximately 10km long and 6km wide may be suitable. In this case, each reservoir would have an area of approximately 13.5 km$^2$. The reservoir walls would need to be tall enough to remain uncovered by the high tide. It is suggested that the device could be built in up to about 30m of water, which is the normal operational limit for normal, free diving.

A cross-section through outer wall 5 is shown in Figure 2. Outer wall 5 is provided with at least one, but preferably a series of, channels 14 which connect the reservoir interior (denoted "R") to the exterior environment (denoted "E"). Each channel 14 is associated with a turbine 15 disposed inside the outer wall 5. Depending on the size of reservoir 2, ideally outer wall 5 will be provided with as many channels 14 and turbines 15 as can feasibly be included along the reservoir periphery.

Each channel 14 is provided with a valve system for controlling the flow of water into and out of the reservoir 2. The required system of valves will depend on the configuration of the channel. The channel 14 could comprise a single passage connecting reservoir 2 to the external environment E, in which case a single valve disposed in the passage could provide the necessary control. However, in the embodiment shown in Figure 2, the channel 14 comprises two passages 14a and 14b linked by a third passage 14c in which the turbine 15 is disposed. The valve system comprises four valves 21, 22, 23 and 24, one disposed adjacent to each point at which the channel 14 exits the wall 5. This arrangement of valves and passages makes it possible to control the route that water follows flowing into or out of the reservoir 2. Further, the valves can be controlled so that the flow of water can selectively bypass the turbine rotor. "Inner" valves 22 and 23 are located in the first passage 14a and second passage 14b respectively, between the reservoir 2 and the third passage 14c. "Outer" valves 21 and 24 are positioned in the first passage 14a and second passage 14b respectively, between the third passage 14c and the external environment E.

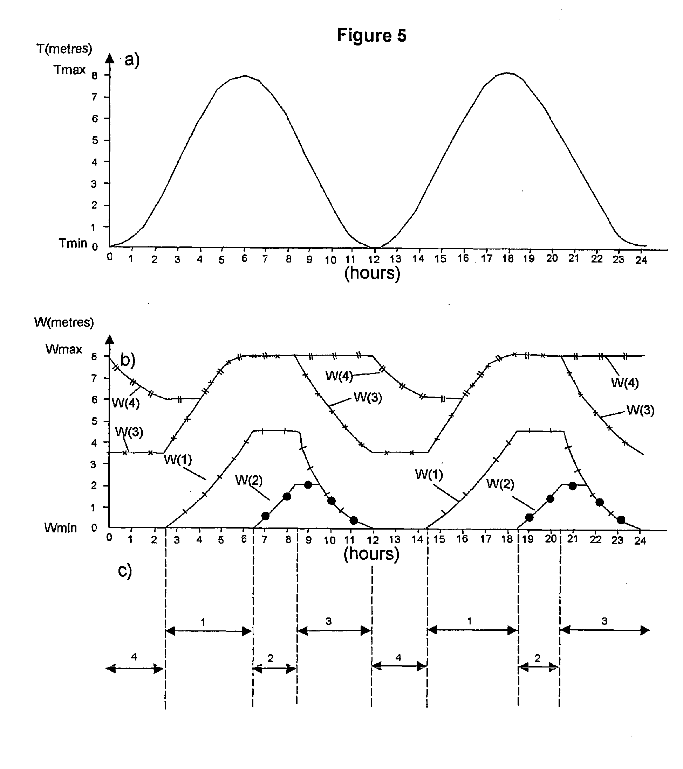

The channel 14 and turbine 15 are entirely submerged. That is, they are positioned in wall 5 lower than the minimum water height the reservoir 2 is expected to encounter. This is the spring low tide, indicated by dashed line SLT in Figure 2. The spring low tide occurs only twice a month and usually the water level of the external environment will vary predictably between a low tide position ($T_{MIN}$) and a high tide position ($T_{MAX}$). The tide causes the water level (T) in the external environment E to vary approximately sinusoidally as shown in Figure 5a. The tidal range (TMAX-$T_{MIN}$) will depend on where the generating device is located and on the local tidal effects. Worldwide, the maximum range achievable is approximately 12 metres while around the UK this varies between approximately 7 and 11 metres. For the purposes of this description, it will be assumed that the local tidal range is approximately 8 metres.

The water level W of the reservoir 2 is controlled by ingress and egress of water through the channels 14. When the tidal level T is greater than the water level W inside the reservoir 2, a hydrostatic head is established which, if the valves 21 to 24 allow, forces water through the channel 14 into the reservoir 2. The magnitude of the force will be dependent on the size of the hydrostatic head. This is determined by the height difference $\Delta$ between water level W in the reservoir 2 and tidal level T outside. The greater $\Delta$, the greater the hydrostatic head and the more potential energy available.

The route taken by the water through the channel 14 is determined by the valve system. In the example shown, when valves 21 and 23 are open and valves 22 and 24 are closed, water, under the action of the hydrostatic head, can follow an approximately S-shaped path indicated by solid arrows A, from the external environment E into the reservoir 2. Water travels along the first passage 14a, down the third passage 14c, through turbine 15 and exits into reservoir 2 via second passage 14b. The flow of water through third passage 14c uses the potential energy associated with the hydrostatic head to turn turbine 15 which rotates about a substantially vertical axis C.

The turbine 15 is connected via a shaft 16 to a gearbox 18 and generator 19 located above the high water mark which convert the rotational energy of the turbine 15 to electricity. For example, the generator 19 could comprise a variable delivery hydraulic pump, geared to the gearbox 18, and a remote motor. The hydraulic medium, preferably not a potential pollutant, would drive the remote hydraulic motor integral with an alternator, the speed of the latter being controlled by a governor linked to the pump delivery control. By this means, the individual, free wheeling, turbine speeds would not need to be identical to guarantee similar alternator speeds thereby compensating for different, or fluctuating, turbine speeds caused by diverse degrees of wear, damage, weather conditions and/or marine fouling. The gearbox and generator are situated in a maintenance shaft 20 and are sealed from the marine environment by means of a sea seal 17. The generator 19 is connected to a switchboard (not shown) and from there, the generated energy may be distributed to the national grid by conventional means.

When the water level W in the reservoir is higher than the tidal level T in the external environment E, the hydrostatic head is reversed. By opening valves 22 and 24 and closing valves 21 and 23, the water can flow, under the action of the hydrostatic head, out of reservoir 2 following path B (dashed lines). Again, the water enters channel 14 via passage 14a, crosses to the second passage 14b via the third passage 14c and thus causes turbine 15 to rotate about axis C in the same direction as before. Turbine 15 rotates in the same direction whether water is flowing into the reservoir (A) or out of the reservoir (B). Thus energy may be generated both as the tide is rising and as the tide falls, effectively utilising the full tidal cycle. This could also be achieved using a simpler arrangement of passages to form channel 14 in combination with a turbine 15 able to rotate and generate power in both directions. However, the geometry of the flow arrangement disclosed in Figure 2 allows for the design of a turbine always rotating in the same direction and thereby eliminates the need for a far more complicated and thus expensive reversible turbine rotor and generator mechanism.

In the example depicted in Figure 2, the first and second passages 14a and 14b are disposed approximately one above the other in substantially parallel horizontal planes. The third passage 14c, containing turbine rotor 15 extends substantially perpendicularly between the first and second passages 14a and 14b along a substantially vertical axis. This arrangement allows the turbine rotor 15 to be in a substantially horizontal plane. This ensures an even load on the support bearing arrangement whilst at the same time permits the full hydrostatic head to be available over the full rotor area. Alternatively, the turbine rotor 15 could be mounted so as to rotate about a horizontal axis, but in this case, the hydrostatic head at the top of the rotor 15 would be less than that at the lower edge giving rise to an imbalance of the forces acting at the top and at the bottom, in turn inducing fluctuations in the rotor loading during rotation. The effective hydrostatic head would therefore be the average of the upper and lower heads.

The horizontal, single direction rotation arrangement of the turbine rotor 15 also means that the coriolis (whirlpool) effect may be used to assist the rotation of the turbine rotor 15. Thus generating devices 10 built in the northern hemisphere may be designed with the turbine rotors 15 adapted to turn in a clockwise direction, and those in the southern hemisphere in an anticlockwise direction.

In order to obtain the maximum energy conversion, the turbine rotors 15 should have as large a diameter as the wall 5 will allow, constrained only by construction engineering and design limitations. The turbines generate high torque using massive water volume throughput at low RPM as contrasts with conventional high speed turbines used in known hydrodynamic energy generators. The diameter of the rotor should be as large as wall 5 will permit to allow the maximum volume of water to pass through the rotor blades per unit time. The turbine rotor 15 will normally be subjected to an approximate maximum static load determined by the following equation:

Effective rotor area x tidal range x specific gravity of
water

The turbine rotor 15 comprises a plurality of blades which may be skewed and of much lighter construction than a ship's propeller, for example, to reflect a lighter blade loading than that associated with marine propulsion. The turbine rotor 15 could be made from a marine alloy such as nickel-aluminium-bronze which has been proven over a long period of time to be well suited to the marine environment and relatively simple to repair. The turbine may also need to be coated in order to increase its resistance to marine fouling and thus lengthen its lifetime. It is envisaged that the operational rotational speed of each rotor will be approximately 40rpm and each rotor will need to be dynamically balanced to reflect this.

In the embodiment shown, the turbine rotor 15 can be bypassed by opening some or all of valves 21 to 24 so that water can flow directly through either the first passage 14a or the second passage 14b. This allows the water level W inside reservoir 2 to equalise with the tidal level T in the exterior environment, since no potential energy is required to turn the turbine 15. Of course, power will not be generated during this step.

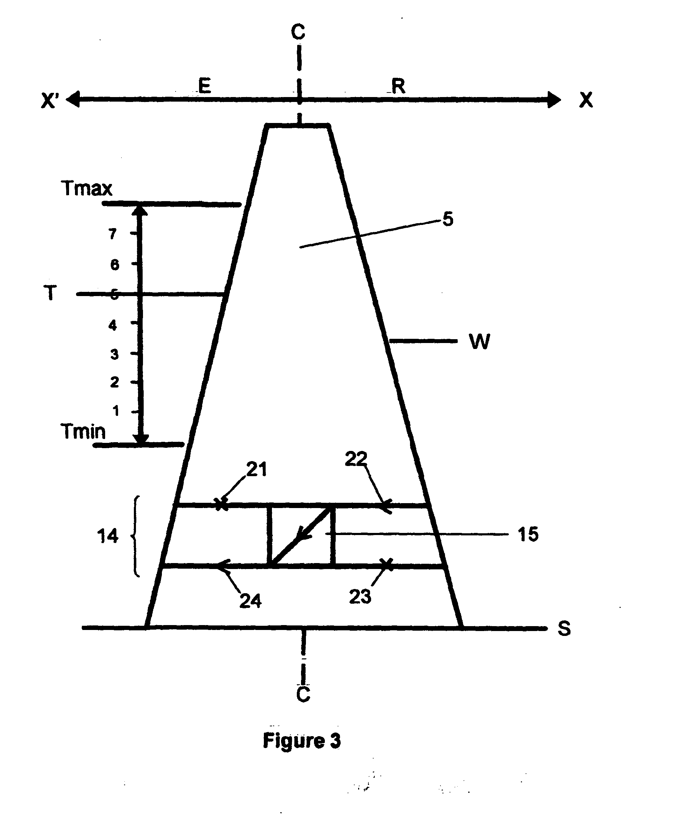

The operation of a hydrodynamic energy generating system having four reservoirs 1, 2, 3 and 4 will now be described with reference to Figures 3, 4, and 5. Each of the reservoirs is provided with a series of channels 14 and turbine rotors 15 as described with respect to reservoir 2, above. A control system is also provided (not shown) for controlling the valve system, in this case valves 21 to 24, associated with each reservoir. By permitting the flow of water into and out of reservoirs 1 to 4 in turn, the generation of energy from each reservoir can be optimised.

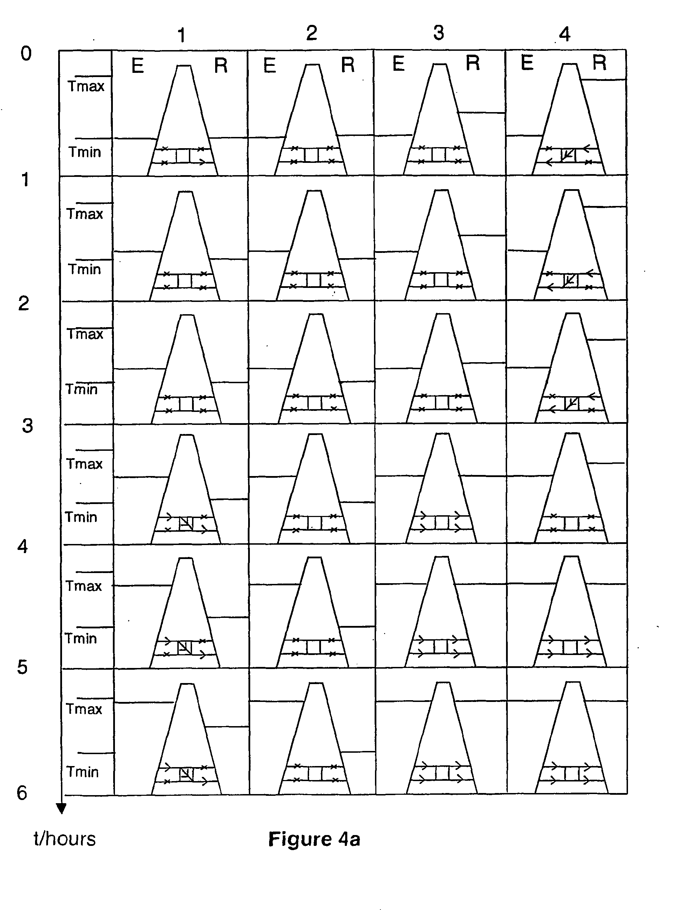

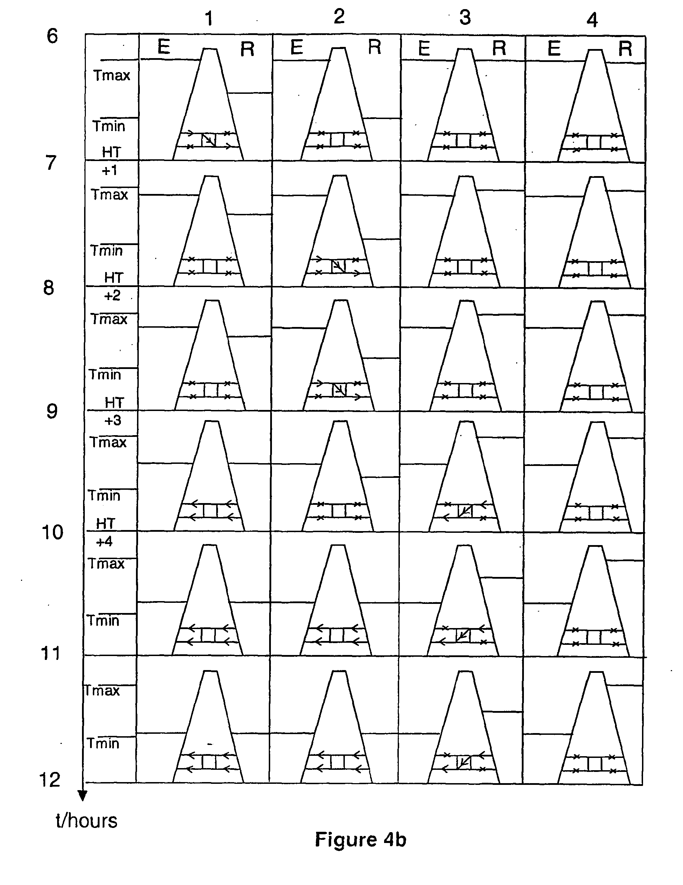

Figure 3 schematically illustrates a cross-section through outer wall 5. It should be noted that in Figure 3, the reservoir interior R is to the right of the diagram. The channel 14 is represented by a series of lines and the turbine rotor 15 by a central box. The status of each valve 21, 22, 23 and 24 is represented by either a cross (X) indicating that the valve is closed, or an arrow (> or <) indicating the direction of water flow through an open valve. Likewise an arrow in box 15 indicates that water flows via the turbine rotor. The tidal level T is indicated by a solid horizontal line T on the left hand side of the diagram and the water level W inside the reservoir is indicated by the solid line W on the right hand side. For illustrative purposes, the tidal range is taken to be 8 metres. The same nomenclature is adhered to in Figures 4a and 4b.

Each reservoir 1 to 4 is designed to hold sufficient water such that, even when all its turbines are in operation, a sufficient hydrostatic head is maintained between tidal level T and water level W in the reservoir so as to ensure sufficient potential energy is available to drive the turbine rotors 15. It is envisaged that the driving head of water should be maintained at at least 3 metres. Preferably, the magnitude of the hydrostatic head associated with a reservoir remains constant throughout the period in which it generates energy. This provides a constant output level from the generating device.

The valve system associated with each reservoir is controlled in a cycle of steps so that water is allowed to flow into the reservoir, where it is held for a predetermined period of time. Water is then allowed to flow out of the reservoir and the reservoir is isolated again for another predetermined period of time. The timing of each of these steps is controlled differently for each reservoir 1 to 4 so that, at any point in time, at least one of the reservoirs is generating energy. The sequence of steps for a hydrodynamic energy generating device consisting of four reservoirs will now be described with reference to Figures 4a and 4b.

At low tide, the valves in reservoirs 1, 2 and 3 are all shut so that the water level in each is isolated and unchanging. The differing water levels are the result of the last cycle of steps applied to the reservoirs. Reservoir 4 has been left with a high internal water level W, and two of its valves are open such that water flows out of the reservoir through the turbine 15 and thus generates energy. An hour later, the tide has risen a small amount but the water level in cisterns 1 to 3 remains constant since all the valves are shut. The water level in cistern 4 has lowered and the hydrostatic head reduced, but there is still sufficient potential energy to drive the turbine. Likewise in hour three, the tide has risen still further but cistern 4 remains operational. It should be noted that the tidal level is now higher than the water level in cisterns 1 and 2 by a small amount.

An hour later, the tide has risen, and the water level in reservoir 4 has fallen so much that there is no longer sufficient hydrostatic head to power the turbine effectively. The valves on cistern 4 are therefore closed. Meanwhile, a large hydrostatic head has developed in both cisterns 1 and 2. Two valves 21 and 23 on cistern 1 are opened to direct water through turbine 15 and generate energy. Cistern 2 remains closed so as to preserve the hydrostatic head for the time being. Since the water levels inside and outside cistern 3 are now equal, all four valves 21 to 24 are opened which allows the levels to equalise without passing through the turbine 15.

In hour five, cistern 1 continues to generate energy as water fills the reservoir. Cistern 2 remains isolated. Both cisterns 3 and 4 have their valves open, bypassing the turbine 15, such that the water level inside each reservoir follows the rising tide. An hour later, as the exterior environment approaches high tide, cistern 1 continues to generate electricity whilst a large hydrostatic head has been created in cistern 2 and both cisterns 3 and 4 are full.

Continuing to Figure 4b, the valves of cisterns 3 and 4 are shut so that the high water level inside each reservoir is maintained as the tide begins to fall. The hydrostatic head in cistern 1 becomes too small to power the turbine and thus the valves are shut off. Power generation moves to cistern 2 in which the interior water level has remained low. Water is allowed to flow into the reservoir through the turbine 15 and power is generated. An hour later, the tide has fallen but reservoir 2 continues to generate energy. After a further hour, levels have equalised around cistern 1 and the valves are completely opened so that the water level can follow the falling tide. Cistern 2 is isolated and cistern 3, which has developed a sufficient hydrostatic head, takes over the energy generation. Cistern 4 remains closed. As the tide falls, both cisterns 1 and 2 are allowed to "empty" with the falling tide. Cistern 3 continues to generate energy whilst the high water level in reservoir 4 is maintained. Finally, just before low tide, cistern 3 continues to generate energy as long as there is sufficient hydrostatic head and the water levels in each reservoir have returned to those shown at the beginning of Figure 4a. The cycle is then repeated.

As has been described, by carrying out the same sequence of four steps in respect of each reservoir in turn, constant round the clock energy generation may be achieved. When the hydrostatic head differential starts to decrease in one cistern, a different cistern is ready to take over and generate energy. The output from each cistern could overlap with that from the next or the control system could manage the reservoirs so that only one generates energy at a time. The process can be summarised by observing that cisterns 1 and 2 are allowed to empty with the tide, thus establishing a large hydrostatic head as the tide rises. Energy is generated as water flows into the cisterns 1 and 2. Reservoirs 3 and 4 on the other hand are not allowed to empty with the falling tide but instead are filled by the rising tide. A large hydrostatic head is achieved when the outside tide is low and thus energy is generated as water flows out of the reservoirs 3 and 4. The cycle repeats itself so that at all times at least one of the reservoirs is generating energy. This is shown in graphical format in Figure 5. Figure 5a represents the rising and falling tide over 24 hours. The tidal level T is the water level of the external environment (outside the reservoirs) and varies approximately sinusoidally. Figure 5b shows the water height in each reservoir 1 to 4 over the same period of time and Figure 5c indicates which of the four reservoirs is generating energy at any one time.

The period of time for which each reservoir must remain isolated from the external environment will depend on the local tidal conditions and the size and number of the reservoirs employed. Effectively, the reservoirs enable the high and low tide to be simulated as required to permit the hydrostatic heads to drive water through the turbines when the outside tide is unavailable. This allows for full power output at all stages of the tide.

Substantially continuous energy generation could be achieved in a similar manner using any number of reservoirs. If a single reservoir is employed, there may be short interruptions to the output when the water levels equalise inside and out, but the vast majority of the tidal cycle could be utilised. A minimum of two reservoirs is required for guaranteed continuous output and, if the reservoirs are appropriately sized and controlled, the output can be generated at a constant level. However, the fewer the reservoirs, the larger each will need to be in order to maintain a sufficient hydrostatic head to provide energy generation over its respective portion of the tidal cycle. Conversely, a large number of reservoirs may be difficult to construct and could increase the complexity of the control cycle. It is therefore believed that a generating device having two or four reservoirs provides a suitable compromise between these factors. It would of course also be possible to construct a series of the devices all managed by the same control system. Hence more than one reservoir could output energy at any one time.

The generating device may additionally be provided with facilities for workers to visit or stay on site to carry out maintenance or repairs. Referring to Figure 1, an entrance lock 9 and harbour 11 may be provided in outer wall 5 for easy access to the device. Inner walls 6 may further be designed to include areas 7 and 8 to accommodate workers and provide leisure and health facilities. The power station control centre could also be housed in or on the wall 6, along with workshops, offices, stores, research centres, a sewage unit and desalination plant.

The above described apparatus and methods provide means which enable the potential power of water to be harnessed wherever a modest head can be found or created, to generate electricity on a scale suitable for local needs. Its use could readily be extended on a smaller scale to any area on land where water falls to gather in rivers or lakes, to generate a supply of electricity for local needs without compromising the water supply for continued use in irrigation or domestic supply further downstream.

The net result of utilising the tides to generate electrical power will be a clean, predictable, reliable, virtually unlimited source of power production, which over a period of time will encourage the reduction of green house gas emissions and global warming while providing civilisation with a viable, reliable, economic supply of electricity. At the same time, the planet's remaining fossil fuels will be released for feedstock to the petrochemical industry, thereby greatly extending its life span, rather than consuming the great bulk of it in the engines and furnaces of the industrial world.

**Claims**

1. A hydrodynamic energy generating assembly (10) comprising at least two hydrodynamic energy generating devices, each device comprising a reservoir (1,2,3,4) bounded by a wall (5,6), a channel (14) through the wall connecting the reservoir (1,2,3,4) to the exterior environment (E), **characterized in that** the channel (14) being provided with a valve system (21, 22, 23, 24) which can be controlled to allow the flow of water through the channel (14) into and out of the reservoir (1,2,3,4), and a turbine rotor (15) being disposed in the channel (14) and coupled to a generator (19) for producing electrical energy in response to rotation of the turbine rotor (15) by the water.

2. A hydrodynamic energy generating assembly (10) according to claim 1 wherein the channel (14) and the turbine rotor (15) are arranged so as to cause the turbine rotor (15) to rotate in the same direction when water flows into the reservoir (1,2,3,4) as when water flows out of the reservoir (1,2,3,4).

3. A hydrodynamic energy generating assembly (10) according to claim 1 or claim 2 wherein the valve system (21,22,23,24) can be further controlled to allow the flow of water to bypass the turbine rotor (15).

4. A hydrodynamic energy generating assembly (10) according to any of the preceding claims wherein the channel (14) comprises first and second passages (14a,14b) through the wall (5,6), each passage (14a,14b) connecting the reservoir (1, 2, 3, 4) to the exterior environment (E), and a third passage (14c) connecting the first passage (14a) to the second passage (14b).

5. A hydrodynamic energy generating assembly (10) according to claim 4 wherein the third passage (14c) is substantially perpendicular to the first and second passages (14a, 14b).

6. A hydrodynamic energy generating assembly (10) according to claim 4 or claim 5 wherein the turbine rotor (15) is disposed in the third passage (14c).

7. A hydrodynamic energy generating assembly (10) according to any of claims 4 to 6 wherein the valve system (21,22,23,24) comprises inner (22,23) and outer valves (21,24), the first and second passages (14a,14b) each being provided with an inner (22,23) and an outer valve (21,24), the inner valve (22,23) disposed between the reservoir interior (R) and the third passage (14c), and the outer valve (21, 24) disposed between the exterior environment (E) and the third passage (14c).

8. A hydrodynamic energy generating assembly (10) according to any of the preceding claims wherein the turbine rotor (15) is rotatably disposed about a substantially vertical axis.

9. A hydrodynamic energy generating assembly (10) according to any of the preceding claims wherein the valve system (21,22,23,24) is further provided with hydraulic control means.

10. A hydrodynamic energy generating assembly (10) according to any of the preceding claims wherein the wall (5,6) is provided with a plurality of channels (14), a turbine rotor (15) being disposed in each channel.

11. A hydrodynamic energy generating assembly (10) according to any of the preceding claims wherein the wall (5,6) bounding the reservoir is formed from a plurality of pre-fabricated interlocking modules.

12. A hydrodynamic energy generating assembly (10) according to any of the preceding claims wherein a portion of the wall (5,6) is a coastal wall.

13. A hydrodynamic energy generating assembly (10) according to any of the preceding claims, further comprising a control system adapted to sequentially control the valve system (21,22,23,24) of each device, thereby controlling the flow of water into and out of each reservoir (1,2,3,4).

14. A hydrodynamic energy generating assembly according to claim 13 wherein the control system is adapted to control the flow of water such that at all times water is flowing into or out of at least one of the reservoirs (1,2,3,4) and is directed via a turbine rotor (15) so that electrical energy is generated continuously.

15. A hydrodynamic energy generating assembly (10) according to any of the preceding claims comprising two hydrodynamic energy generating devices.

**16.** A hydrodynamic energy generating assembly (10) according to any of the preceding claims comprising four hydrodynamic energy generating devices.

**17.** A hydrodynamic energy generating assembly (10) according to claim 16, when dependent on claim 13 or claim 14, wherein the control system is further adapted to control the respective valve system (21,22,23,24) of each device such that electrical energy is generated by each of the four devices in turn.

**18.** A hydrodynamic energy generating assembly according to any of the preceding claims wherein a portion of the wall (5,6) of at least two of the reservoirs is common to those reservoirs.

**19.** A modular system which, when constructed, forms a hydrodynamic energy generating assembly (10) according to any of the preceding claims.

**20.** A method of hydrodynamic energy generation utilising tidal energy comprising the steps of:

(a) allowing water to pass, under tidal action, through a channel (14) into a first reservoir (1,2,3,4), from the external environment (E);
(b) preventing water flowing into or out of the first reservoir (1,2,3,4) for a predetermined period of time, during which there is a change in tidal conditions;
(c) after a change in tidal conditions, allowing water to pass through the channel (14) out of the first reservoir (1,2,3,4), into the external environment (E); and
(d) preventing water flowing into or out of the first reservoir (1;2,3,4) for a predetermined period of time, during which there is a change in tidal conditions;

wherein the flow of water in at least one of step (a) or step (c) is directed via a turbine rotor (15) disposed in the channel (14), the turbine rotor (15) being coupled to means (19) for producing electrical energy, and steps (a) to (d) are additionally performed in respect of at least a second reservoir (1,2,3,4).

**21.** A method of hydrodynamic energy generation according to claim 20 wherein steps (a) to (d) are additionally performed in respect of a third and a fourth reservoir (1,2,3,4).

**22.** A method of hydrodynamic energy generation according to claim 20 or claim 21 wherein the predetermined periods of time in steps (b) and (d) are different for each of the reservoirs (1,2,3,4).

**23.** A method of hydrodynamic energy generation according to any of claims 20 to 22 wherein performance of steps (a) to (d) in respect of each reservoir (1,2,3,4) is staggered relative to the other reservoir(s) (1,2,3,4).

**24.** A method of hydrodynamic energy generation according to any of claims 20 to 23 wherein the sequence of steps performed is such that, at all times, water is flowing into or out of at least one of the reservoirs (1,2,3,4) via a turbine rotor (15), such that electrical energy is continuously generated.

**25.** A method of hydrodynamic energy generation according to at least claim 21 wherein energy is generated from the first and second reservoirs (1,2) during step (a) and from the third and fourth reservoirs (3,4) during step (c).

**Patentansprüche**

**1.** Anordnung zur Erzeugung von hydrodynamischer Energie (10), umfassend zumindest zwei Vorrichtungen zur Erzeugung von hydrodynamischer Energie,
wobei jede Vorrichtung ein Becken (1, 2, 3, 4) umfasst, das von einer Wand (5, 6) begrenzt wird, wobei ein Kanal (14), der durch die Wand verläuft, das Becken (1, 2, 3, 4) mit der Außenumgebung (E) verbindet, **dadurch gekennzeichnet, dass** der Kanal (14) mit einem Ventilsystem (21, 22, 23, 24) ausgestattet ist, das gesteuert werden kann, um den Wasserfluss durch den Kanal (14) in das und aus dem Becken (1, 2, 3 4) zu ermöglichen, und wobei ein Turbinenläufer (15) im Kanal (14) angeordnet und an einen Generator (19) gekoppelt ist, um aufgrund der Drehung des Turbinenläufers (15) durch das Wasser elektrische Energie zu erzeugen.

**2.** Anordnung zur Erzeugung von hydrodynamischer Energie (10) nach Anspruch 1, wobei der Kanal (14) und der Turbinenläufer (15) so angeordnet sind, dass der Turbinenläufer (15) veranlasst wird, sich jeweils in die gleiche Richtung zu drehen, sowohl wenn das Wasser in das Becken (1, 2, 3, 4) fließt, als auch wenn das Wasser aus dem Becken (1, 2, 3, 4) herausfließt.

3. Anordnung zur Erzeugung von hydrodynamischer Energie (10) nach Anspruch 1 oder 2, wobei das Ventilsystem (21, 22, 23, 24) des Weiteren gesteuert werden kann, damit der Wasserfluss den Turbinenläufer (15) umgehen kann.

4. Anordnung zur Erzeugung von hydrodynamischer Energie (10) nach einem der vorhergehenden Ansprüche, wobei der Kanal (14) erste und zweite Durchgänge (14a, 14b) durch die Wand (5, 6) umfasst, wobei jeder Durchgang (14a, 14b) das Becken (1, 2, 3, 4) mit der Außenumgebung (E) verbindet, sowie einen dritten Durchgang (14c), der den ersten Durchgang (14a) mit dem zweiten Durchgang (14b) verbindet.

5. Anordnung zur Erzeugung von hydrodynamischer Energie (10) nach Anspruch 4, wobei der dritte Durchgang (14c) im Wesentlichen senkrecht zum ersten und zweiten Durchgang (14a, 14b) verläuft.

6. Anordnung zur Erzeugung von hydrodynamischer Energie (10) nach Anspruch 4 oder 5, wobei der Turbinenläufer (15) im dritten Durchgang (14c) angeordnet ist.

7. Anordnung zur Erzeugung von hydrodynamischer Energie (10) nach einem der Ansprüche 4 bis 6, wobei das Ventilsystem (21, 22, 23, 24) innere (22, 23) und äußere Ventile (21, 24) umfasst, wobei der erste und zweite Durchgang (14a, 14b) jeweils mit einem inneren (22, 23) und einem äußeren Ventil (21, 24) ausgestattet sind, wobei das innere Ventil (22, 23) zwischen dem Beckeninneren (R) und dem dritten Durchgang (14c) angeordnet ist und das äußere Ventil (21, 24) zwischen der Außenumgebung (E) und dem dritten Durchgang (14c) angeordnet ist.

8. Anordnung zur Erzeugung von hydrodynamischer Energie (10) nach einem der vorhergehenden Ansprüche, wobei der Turbinenläufer (15) drehbar um eine im Wesentlichen vertikale Achse angeordnet ist.

9. Anordnung zur Erzeugung von hydrodynamischer Energie (10) nach einem der vorhergehenden Ansprüche, wobei das Ventilsystem (21, 22, 23, 24) des Weiteren mit hydraulischen Steuermitteln ausgestattet ist.

10. Anordnung zur Erzeugung von hydrodynamischer Energie (10) nach einem der vorhergehenden Ansprüche, wobei die Wand (5, 6) mit mehreren Kanälen (14) ausgestattet ist, wobei in jedem Kanal ein Turbinenläufer (15) angeordnet ist.

11. Anordnung zur Erzeugung von hydrodynamischer Energie (10) nach einem der vorhergehenden Ansprüche, wobei die Wand (5, 6), die das Becken begrenzt, aus mehreren, ineinander greifenden Fertigteilmodulen gebildet wird.

12. Anordnung zur Erzeugung von hydrodynamischer Energie (10) nach einem der vorhergehenden Ansprüche, wobei ein Teil der Wand (5, 6) eine Küstenwand ist.

13. Anordnung zur Erzeugung von hydrodynamischer Energie (10) nach einem der vorhergehenden Ansprüche, des Weiteren umfassend ein Steuerungssystem, das geeignet ist, das Ventilsystem (21, 22, 23, 24) jeder Vorrichtung sequenziell zu steuern, dabei wird der Wasserfluss in jedes und aus jedem Becken (1, 2, 3, 4) gesteuert.

14. Anordnung zur Erzeugung von hydrodynamischer Energie nach Anspruch 13, wobei das Steuerungssystem geeignet ist, den Wasserfluss so zu steuern, dass jederzeit Wasser in mindestens eines oder aus mindestens einem der Becken (1, 2, 3, 4) fließt und über einen Turbinenläufer (15) geleitet wird, so dass ununterbrochen elektrische Energie erzeugt wird.

15. Anordnung zur Erzeugung von hydrodynamischer Energie (10) nach einem der vorhergehenden Ansprüche, umfassend zwei Vorrichtungen zur Erzeugung von hydrodynamischer Energie.

16. Anordnung zur Erzeugung von hydrodynamischer Energie (10) nach einem der vorhergehenden Ansprüche, umfassend vier Vorrichtungen zur Erzeugung von hydrodynamischer Energie.

17. Anordnung zur Erzeugung von hydrodynamischer Energie (10) nach Anspruch 16, wenn abhängig von Anspruch 13 oder 14, wobei das Steuerungssystem des Weiteren geeignet ist, das jeweilige Ventilsystem (21, 22, 23, 24) jeder Vorrichtung so zu steuern, dass von jeder der vier Vorrichtungen abwechselnd elektrische Energie erzeugt wird.

**18.** Anordnung zur Erzeugung von hydrodynamischer Energie nach einem der vorhergehenden Ansprüche, wobei ein Teil der Wand (5, 6) von mindestens zwei der Becken diesen beiden Becken gemeinsam ist.

**19.** Modulares System, das, sobald es aufgebaut ist, eine Anordnung zur Erzeugung von hydrodynamischer Energie (10) nach einem der vorhergehenden Ansprüche bildet.

**20.** Verfahren zur Erzeugung von hydrodynamischer Energie unter Verwendung von Gezeitenenergie, umfassend folgende Schritte:

(a) Ermöglichen des Fließens von Wasser unter Einwirkung der Gezeiten von der Außenumgebung (E) durch einen Kanal (14) in ein erstes Becken (1, 2, 3, 4);
(b) Verhindern des Fließens von Wasser in das erste oder aus dem ersten Becken (1, 2, 4) über eine vorausbestimmte Zeitdauer, während dieser ein Wechsel der Gezeitenbedingungen stattfindet;
(c) nach einem Wechsel der Gezeitenbedingungen, Ermöglichen des Fließens von Wasser durch den Kanal (14) aus dem ersten Becken (1, 2, 3, 4) in die Außenumgebung (E); und
(d) Verhindern des Fließens von Wasser in das erste oder aus dem ersten Becken (1, 2, 3, 4) über eine vorausbestimmte Zeitdauer, während der ein Wechsel der Gezeitenbedingungen stattfindet;

wobei der Wasserfluss in mindestens einem der Schritte (a) oder (c) über einen Turbinenläufer (15) geleitet wird, der im Kanal (14) angeordnet ist, wobei der Turbinenläufer (15) an Mittel (19) zum Erzeugen elektrischer Energie gekoppelt ist, und die Schritte (a) bis (d) zusätzlich in Bezug auf mindestens ein zweites Becken (1, 2, 3, 4) ausgeführt werden.

**21.** Verfahren zur Erzeugung von hydrodynamischer Energie nach Anspruch 20, wobei die Schritte (a) bis (d) zusätzlich in Bezug auf ein drittes und ein viertes Becken (1, 2, 3, 4) ausgeführt werden.

**22.** Verfahren zur Erzeugung von hydrodynamischer Energie nach Anspruch 20 oder 21, wobei die vorausbestimmten Zeitdauern der Schritte (b) und (d) für jedes der Becken (1, 2, 3, 4) unterschiedlich sind.

**23.** Verfahren zur Erzeugung von hydrodynamischer Energie nach einem der Ansprüche 20 bis 22, wobei die Ausführung der Schritte (a) bis (d) in Bezug auf jedes Becken (1, 2, 3, 4) bezogen auf das (die) andere(n) Becken (1, 2, 3, 4) versetzt erfolgt.

**24.** Verfahren zur Erzeugung von hydrodynamischer Energie nach einem der Ansprüche 20 bis 23, wobei die Abfolge der ausgeführten Schritte so aussieht, dass Wasser jederzeit in mindestens eines oder aus mindestens einem der Becken (1, 2, 3, 4) über einen Turbinenläufer (15) fließt, so dass ununterbrochen elektrische Energie erzeugt wird.

**25.** Verfahren zur Erzeugung von hydrodynamischer Energie zumindest nach Anspruch 21, wobei Energie aus dem ersten und zweiten Becken (1, 2) während des Schrittes (a) und Energie aus dem dritten und vierten Becken (3, 4) während des Schrittes (c) erzeugt wird.


**Revendications**

**1.** Ensemble hydrodynamique (10) de production d'énergie qui comprend au moins deux dispositifs hydrodynamiques de production d'énergie, chaque dispositif comprenant un réservoir (1, 2, 3, 4) délimité par une paroi (5, 6), un canal (14) traversant la paroi qui relie le réservoir (1, 2, 3, 4) à l'environnement extérieur (E), **caractérisé en ce que** le canal (14) est doté d'un système de clapet (21, 22, 23, 24) qui peut être commandé pour permettre l'écoulement de l'eau par le canal (14) vers l'intérieur du réservoir (1, 2, 3, 4) ou hors de celui-ci et un rotor de turbine (15) qui est placé dans le canal (14) et couplé à un générateur (19) pour produire de l'énergie électrique grâce à la mise en rotation du rotor de turbine (15) par l'eau.

**2.** Ensemble hydrodynamique (10) de production d'énergie selon la revendication 1, dans lequel le canal (14) et le rotor de turbine (15) sont agencés pour faire tourner le rotor de turbine (15) dans la même direction lorsque l'eau s'écoule vers l'intérieur du réservoir (1, 2, 3, 4) ainsi que lorsque l'eau s'écoule hors du réservoir (1, 2, 3, 4).

**3.** Ensemble hydrodynamique (10) de production d'énergie selon la revendication 1 ou la revendication 2, dans lequel le système de clapet (21, 22, 23, 24) peut de plus être commandé pour permettre de dériver l'écoulement d'eau par le rotor de turbine (15).

4. Ensemble hydrodynamique (10) de production d'énergie selon l'une quelconque des revendications précédentes, dans lequel le canal (14) comprend un premier passage et un deuxième passage (14a, 14b) dans la paroi (5, 6), chaque passage (14a, 14b) reliant le réservoir (1, 2, 3, 4) à l'environnement extérieur (E) et un troisième passage (14c) reliant le premier passage (14a) au deuxième passage (14b),

5. Ensemble hydrodynamique (10) de production d'énergie selon la revendication 4, dans lequel le troisième passage (14c) est essentiellement perpendiculaire au premier passage et au deuxième passage (14a, 14b).

6. Ensemble hydrodynamique (10) de production d'énergie selon la revendication 4 ou la revendication 5, dans lequel le rotor de turbine (15) est placé dans le troisième passage (14c).

7. Ensemble hydrodynamique (10) de production d'énergie selon l'une quelconque des revendications 4 à 6, dans lequel le système de clapet (21, 22, 23, 24) comprend des clapets internes (22, 23) et des clapets externes (21, 24), le premier passage et le deuxième passage (14a, 14b) étant tous deux dotés d'un clapet interne (22, 23) et d'un clapet externe (21, 24), le clapet interne (22, 23) étant placé entre l'intérieur (R) du réservoir et le troisième passage (14c) et le clapet externe (21, 24) étant placé entre l'environnement extérieur (E) et le troisième passage (14c).

8. Ensemble hydrodynamique (10) de production d'énergie selon l'une quelconque des revendications précédentes, dans lequel le rotor de turbine (15) est disposé de manière à pouvoir tourner autour d'un axe essentiellement vertical.

9. Ensemble hydrodynamique (10) de production d'énergie selon l'une quelconque des revendications précédentes, dans lequel le système de clapet (21, 22, 23, 24) est de plus doté de moyens hydrauliques de commande.

10. Ensemble hydrodynamique (10) de production d'énergie selon l'une quelconque des revendications précédentes, dans lequel la paroi (5, 6) est dotée de plusieurs canaux (14), un rotor de turbine (15) étant disposé dans chaque canal.

11. Ensemble hydrodynamique (10) de production d'énergie selon l'une quelconque des revendications précédentes, dans lequel la paroi (5, 6) reliant le réservoir est formée de plusieurs modules préfabriqués qui s'emboîtent.

12. Ensemble hydrodynamique (10) de production d'énergie selon l'une quelconque des revendications précédentes, dans lequel une partie de la paroi (5, 6) est une paroi côtière.

13. Ensemble hydrodynamique (10) de production d'énergie selon l'une quelconque des revendications précédentes, comprenant de plus un système de commande adapté pour commander séquentiellement le système de clapet (21, 22, 23, 24) de chaque dispositif pour commander par ce moyen l'écoulement d'eau entrant et sortant de chaque réservoir (1, 2, 3, 4).

14. Ensemble hydrodynamique de production d'énergie selon la revendication 13, dans lequel le système de commande est adapté pour commander l'écoulement d'eau de telle sorte qu'à tout moment l'eau s'écoule vers l'intérieur d'au moins un des réservoirs (1, 2, 3, 4) ou hors de ces réservoirs et soit orientée par un rotor de turbine (15) pour que l'énergie électrique soit produite en continu.

15. Ensemble hydrodynamique (10) de production d'énergie selon l'une quelconque des revendications précédentes, comprenant deux dispositifs hydrodynamiques de production d'énergie.

16. Ensemble hydrodynamique (10) de production d'énergie selon l'une quelconque des revendications précédentes, comprenant quatre dispositifs hydrodynamiques de production d'énergie.

17. Ensemble hydrodynamique (10) de production d'énergie selon la revendication 16 dans la mesure où elle dépend de la revendication 13 ou de la revendication 14, dans lequel le système de commande est de plus adapté pour commander le système respectif de clapet (21, 22, 23, 24) de chaque dispositif pour que l'énergie électrique soit produite à tour de rôle par chacun des quatre dispositifs.

18. Ensemble hydrodynamique de production d'énergie selon l'une quelconque des revendications précédentes, dans lequel une partie de la paroi (5, 6) d'au moins deux des réservoirs est commune à celle des réservoirs.

**19.** Système modulaire qui, lorsqu'il est construit, forme un ensemble hydrodynamique (10) de production d'énergie selon l'une quelconque des revendications précédentes.

**20.** Procédé de production hydrodynamique d'énergie qui utilise l'énergie des marées et qui comprend les étapes qui consistent à :

(a) sous l'action de la marée, faire passer l'eau de l'environnement extérieur (E) à un premier réservoir (1, 2, 3, 4) par un canal (14),
(b) empêcher l'eau de s'écouler vers l'intérieur ou hors du premier réservoir (1, 2, 3, 4) pendant une durée prédéterminée pendant laquelle il y a un changement des conditions de marée,
(c) après un changement des conditions de marée, faire passer L'eau hors du premier réservoir (1, 2, 3, 4) vers l'environnement extérieur (E) par un canal (14) et
(d) empêcher l'eau de s'écouler vers l'intérieur ou hors du premier réservoir (1, 2, 3, 4) pendant une durée prédéterminée, pendant laquelle il y a un changement des conditions de marée,

l'écoulement d'eau qui a lieu au cours d'au moins l'étape (a) ou l'étape (c) étant dirigé au moyen d'un rotor de turbine (15) placé dans le canal (14), le rotor de turbine (15) étant accouplé au moyen (19) de production d'énergie électrique et les étapes (a) à (d) sont de plus réalisées sur au moins un deuxième réservoir (1, 2, 3, 4).

**21.** Procédé de production hydrodynamique d'énergie selon la revendication 20, dans lequel les étapes (a) à (d) sont de plus réalisées sur un troisième réservoir et sur un quatrième réservoir (1, 2, 3, 4).

**22.** Procédé de production hydrodynamique d'énergie selon la revendication 20 ou selon la revendication 21, dans lequel les durées prédéterminées des étapes (b) et (d) sont différentes pour chacun des réservoirs (1, 2, 3, 4) .

**23.** Procédé de production hydrodynamique d'énergie selon l'une quelconque des revendications 20 à 22, dans lequel l'exécution des étapes (a) à (d) sur chaque réservoir (1, 2, 3, 4) est échelonnée par rapport à un autre réservoir ou aux autres réservoirs (1, 2, 3, 4).

**24.** Procédé de production hydrodynamique d'énergie selon l'une quelconque des revendications 20 à 23, dans lequel la séquence des étapes réalisées est telle qu'à tout moment, l'eau s'écoule vers l'intérieur ou hors d'au moins un des réservoirs (1, 2, 3, 4) par l'intermédiaire d'un rotor de turbine (15) pour que l'énergie électrique soit produite de façon continue.

**25.** Procédé de production hydrodynamique d'énergie selon au moins la revendication 21, dans lequel l'énergie est produite à partir du premier réservoir et du deuxième réservoir (1, 2) pendant l'étape (a) et à partir du troisième réservoir et du quatrième réservoir (3,4) pendant l'étape (c).

Figure 1

**Figure 2**

**Figure 3**

**Figure 4a**

t/hours

Figure 4b

## Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60098174 A
- JP 60098175 B
- GB 0349260 A
- FR 1055437 A
- US 20030192308 A